# EUROPEAN PATENT APPLICATION

(11) **EP 1 884 163 A1**
(43) Date of publication of application: **06.02.2008**
(21) Application number: 06015274.1
(22) Date of filing: 21.07.2006
(51) Int. Cl.: A23B 4/03, A23B 4/02, A23L 3/18

(54) **Preparation of a food product**

(71) Applicant: CFS Bakel B.V., 5761 EN Bakel (NL)
(72) Inventor: The designation of the inventor has not yet been filed
(74) Representative: Wolff, Felix

(57) **Abstract**

Method for the preparation of a food product, comprising the steps of providing a green meat product, marinating the meat product with a brine solution and drying the meat product.

## Description

The present invention relates to a method for the preparation of a food product, comprising the steps of providing a green meat product, marinating the meat product with a brine solution and drying the meat product.

In meat processing there is the need for uniform dispersion of the brine solution in the meat product. By methods, in which needle injectors for injecting the brine into the meat with a plurality of needles are used, the brine solution can be dispersed more uniformly. However, immediately after injection, the liquid brine solution is still accumulated in portions into which the needles are stuck. Therefore, the meat is tumbled or massaged, for example, and then hold or cured until the liquid brine permeates through the meat and is uniformly dispersed. Only then a drying and/or smoking process is started. Both the holding/curing process and the drying/smoking process take an unfavourable long time of several days. In EP 0 879 561 B1, a control of injection pressure, injection time and injection depth is proposed, in particular depending on the type and size of the meat product, in order to shorten the necessary holding time. The drying/smoking process is not shortened by the known method and the holding/curing time of one day does not yet meet the requirements of industrial meat processing. It is, for example, a drawback that the known processes still do not allow for in-line processing of the meat with subsequent process steps.

It is therefor an object of the present invention to provide an enhanced method for the preparation of a meat product that avoids the drawbacks of the prior art.

The above objective is accomplished by a method for the preparation of a food product, comprising the steps of:
- providing a green meat product,
- marinating the meat product with a brine solution and
- drying the meat product,
wherein the meat product is dried for one to four hours.

A green meat product, in the sense of this invention, is any raw and untreated piece of pork, beef, poultry or game, preferably pork belly. Drying in the sense of the invention means that moisture is drawn off the meat product, whereas the fat stays unimpaired. It was surprising for the person skilled in the art that a drying time between one hour and four hours is sufficient to produce a cured meat product. It is an advantage of the present invention, that the preparation process from a green meat product to a cured product takes less than one day.

Preferably, the drying process is started immediately after marinating the meat product. Depending upon the size and kind of meat, a holding time of up to six hours before drying is as well preferred, so that the drying is started six hours after marinating, at latest. Thus the holding time plus drying time does not exceed ten hours which is advantageously less than known prior art processes take.

The preparation of the food product by marinating, in the sense of the invention, comprises any possible way of addition of a brine solution to the meat product, for example for pickling, seasoning, tenderizing, curing and/or increasing the weight of the meat product. The brine solution is preferably prepared from water and one or more of the ingredients salt, phosphate, nitrite salt, nitrate salt, dextrose, glucose, maltose, saccharose or other kinds of sugar, ascorbate, k-nitrate, pepper, garlic, acetolac, carrageenan or other kinds of gum, vegetable protein and animal protein.

Preferably, the brine solution is injected into the meat product, for example by a single or multiple needle injector or by a needle-less injector. Injection of the brine solution advantageously allows a high uptake of brine solution into the meat in a relatively short time and provides a relatively high grade of dispersion of the brine inside the meat, from the beginning. During marinating, the weight of the green meat product is preferably increased by 5% to 25%, more preferable by 10% to 20 %, through the uptake of brine solution.

In a preferred embodiment, the meat product is dried in a spiral oven. A spiral oven advantageously allows the controlled application of heat to the meat product and the ventilation of air. The meat product is transported on a spiral trajectory through the spiral oven which takes a predetermined time of one hour to four hours, according to the invention. An advantage of the spiral oven, compared to a common smoking chamber, is that the meat product is fed into the spiral oven continuously and the output is continuous, as well. This allows subsequent in-line processing of the dried meat product.

The spiral oven preferably comprises at least one fan and the meat product is preferably ventilated during drying by the fan which is rotated at up to 1500 rpm, preferably at 200 rpm to 1300 rpm, more preferable at 1100 rpm to 1300 rpm.

During drying, the weight of the meat product diminishes. In a preferred embodiment of the inventive method, the weight of the marinated meat product is decreased by less than 10% during drying, more preferable by less than 6% of the weight of the marinated meat. The dried meat product thus yields a weight which is advantageously only little lower than the weight of the green meat product, or, preferably, the dried meat product even comprises an equal or higher weight, compared to the weight of the green meat product. The inventive method is therefor most desirable for economical production of meat products on an industrial scale.

In a preferred embodiment, the dewpoint is held below 20 °C during drying and the temperature applied during drying is preferably 50 °C to 80 °C. This allows advantageously effective drawing off of moisture from the marinated meat product and thus quick drying.

A peak core temperature of the meat product during drying is preferably between 25 °C and 40 °C, such that the food product is advantageously not cooked. Also preferred, a surface temperature of the meat product is between 45 °C and 60 °C, during drying. Depending upon the desired food product, the fact that minor small parts at the surface of the meat product start cooking, may be acceptable, such that the upper margin of this range can be advantageously exploited for these food products.

In a further preferred embodiment, the meat product is smoked. Preferably, liquid smoke is sprayed onto the meat product, particularly between the steps of marinating and drying. Alternatively, the meat product is smoked during drying in gaseous smoke. The smoke flavour and/or the surface appearance of the meat product is thus enhanced. The amount of liquid smoke in the brine solution can be lowered.

In a further preferred embodiment, the inventive method further comprises the subsequent steps of:
- freezing the dried meat product,
- slicing up the dried meat product and
- packaging the sliced meat product.

It is particularly preferred that drying and freezing of the meat product is executed subsequently in an in-line process. More preferably, the subsequent step of slicing and, yet more preferable, the subsequent step of packaging of the meat product are performed in the in-line process. In-line processing means that the meat product is processed in the next following preparation step without any delay or even interim storage. In-line processing is economically advantageous and facilitates the compliance with hygienic standards.

Freezing the meat product is preferably executed such that the meat product reaches a temperature between -10 °C and +2 °C. Preferably, the meat product is sliced up at a temperature between -10 °C and +2 °C. Slicing, in the sense of the invention, means any appropriate kind of separating the piece of meat into smaller units, like for example, slices or dices.

Packaging of the sliced or diced meat product is executed, preferably, on an in-line packaging machine, like, for example, a form-fill-seal packaging machine, a traysealer or a flowwrapper. The meat product is preferably packaged under a modified atmosphere of nitrogen and/or carbon dioxide of any user-defined mixture degree.

The following table shows experimental data about the drying process according to the inventive method, illustrating the effect of drying temperature, drying duration and ventilation on the loss of weight of the meat product.

**Table 1:**

| Nr. | A | B | C | D |
|---|---|---|---|---|
| 1 | 60°C | 800rpm | 87min. | 94% |
| 2 | 60°C | 200rpm | 180min. | 93% (average of 5 tests) |
| 3 | 80°C | 1300rpm | 45min. | 94,2% |
| 4 | 60°C | 1100rpm | 45min. | 95,7% |
| 5 | 65°C | 1100rpm | 45min. | 94,5% |
| 6 | 80°C | 1300rpm | 40min. | 95,4% |
| 7 | 80°C | 1300rpm | 35min. | 94,1% |

In row A, the applied temperature of the spiral oven is given. Row B contains the rotation speed of the spiral oven ventilator. In row C, the duration of the drying process is given and in row D, the weight ratio of the dried meat product to the marinated meat product prior to drying is given. Trials 1 to 3 have been conducted with meat products which have been injected an amount of a salt brine at 10 weight-% of the green meat product weight. In trials 4 to 7, the amount of brine injected was 16 weight-% of the green meat product weight.

These and other characteristics, features and advantages of the present invention will become apparent from the following detailed description, taken in conjunction with the accompanying drawing, which illustrates, by way of example, the principles of the invention. The description is given for the sake of example only, without limiting the scope of the invention. The reference figures quoted below refer to the attached drawing.

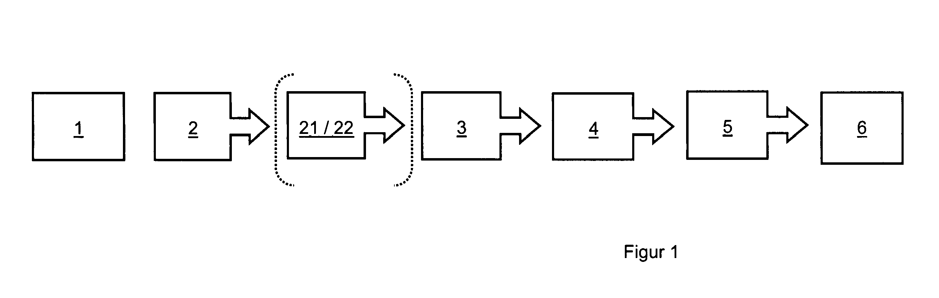

Figure 1 illustrates the method according to the invention by way of a flow process chart.

In Figure 1, a flow process chart is depicted, illustrating a method for the preparation of a food product. In step 1, a green meat product is provided, such as a green pork belly. In step 2, the green meat product is marinated, in particular by injection of a brine solution. The weight of the injected brine solution amounts to, for example, 16% of the weight of the green meat product. Optional step 21 is a holding step, wherein the meat product with the brine solution injected is given time, such that the dispersion of the brine solution throughout the meat product can be enhanced, if necessary. The maximum time for holding is six hours, depending upon the size and type of meat.

A further optional step 22 is spraying liquid smoke onto the surface of the meat product, before the meat product in step 3 is dried for one to four hours, in particular by means of a spiral oven. After the drying process at temperatures of up to 80 °C and a dewpoint below 20 °C, the meat product looses, for example, about 8% of its weight after injection of the brine solution. The dispersion of the brine solution advantageously continues during the drying process. After the step of drying, the meat product is preferably frozen in step 4 and, for example, cut into slices or dices in step 5. The cut meat product shows an even dispersion of the brine solution throughout the meat product. The freezing temperature is preferably adapted to optimal slicing or dicing conditions. After slicing, the cut meat product is packaged in step 6, preferably under modified atmosphere packaging (MAP) conditions, in particular under a mixture of carbondioxide and nitrogen.

## Claims

1. Method for the preparation of a food product, comprising the steps of:
- providing a green meat product,
- marinating the meat product with a brine solution and
- drying the meat product,
**characterized in that** the meat product is dried for one to four hours.

2. Method according to claim 1, **characterized in that** the drying is started six hours after marinating, at latest.

3. Method according to one of claims 1 or 2, **characterized in that** the brine solution is injected into the meat product.

4. Method according to one of the preceding claims, **characterized in that** the weight of the green meat product is increased by 5% to 25%, preferably by 10% to 20 %, through the uptake of brine solution during marinating.

5. Method according to one of the preceding claims, **characterized in that** the meat product is dried in a spiral oven.

6. Method according to one of the preceding claims, **characterized in that** the meat product is ventilated during drying by a fan, the fan rotating at up to 1500 rpm, preferably at 200 rpm to 1300 rpm, more preferable at 1100 rpm to 1300 rpm.

7. Method according to one of the preceding claims, **characterized in that** the weight of the marinated meat product is decreased by less than 10% during drying, preferably by less than 6%.

8. Method according to one of the preceding claims, **characterized in that** the dewpoint is held below 20 °C during drying.

9. Method according to one of the preceding claims, **characterized in that** the temperature applied during drying is 50 °C to 80 °C.

10. Method according to one of the preceding claims, **characterized in that** a peak core temperature of the meat product during drying is between 25 °C and 40 °C.

11. Method according to one of the preceding claims, **characterized in that** a surface temperature of the meat product during drying is between 45 °C and 60 °C.

12. Method according to one of the preceding claims, **characterized in that** liquid smoke is sprayed onto the meat product between the steps of marinating and drying.

13. Method according to one of the preceding claims, **characterized in that** the meat product is smoked during drying in gaseous smoke.

14. Method according to one of the preceding claims, further comprising the subsequent steps of:
- freezing the dried meat product,
- slicing up the dried meat product and
- packaging the sliced meat product.

15. Method according to claim 14, **characterized in that** drying and freezing and preferably slicing and more preferable packaging of the meat product is executed subsequently in an in-line process.

16. Method according to one of the preceding claims, **characterized in that** the meat product is sliced up at a temperature between -10 °C and +2 °C.

17. Method according to one of the preceding claims, **characterized in that** the meat product is packaged under a modified atmosphere of nitrogen and/or carbon dioxide.

18. Method according to one of the preceding claims, **characterized in that** the brine solution is prepared from water and one or more of the ingredients salt, phosphate, nitrite salt, nitrate salt, dextrose, glucose, maltose, saccharose or other kinds of sugar, ascorbate, k-nitrate, pepper, garlic, acetolac, carrageenan or other kinds of gum, vegetable protein and animal protein.
